# FASCICULE DE BREVET EUROPEEN

(11) **EP 3 999 765 B1**
(45) Date de publication et mention de la délivrance du brevet: **28.12.2022**
(21) Numéro de dépôt: 20750710.4
(22) Date de dépôt: 10.07.2020
(51) Int. Cl.: F16L 37/088, F16L 37/098, F16L 37/091

(54) **DISPOSITIF DE RACCORDEMENT FLUIDIQUE COMPACT ET DÉMONTABLE**
KOMPAKTE UND DEMONTIERBARE FLUIDVERBINDUNGSVORRICHTUNG
COMPACT AND DEMOUNTABLE FLUID CONNECTION DEVICE

(30) Priorité: 15.07.2019 FR 1907932
(43) Date de publication de la demande: 25.05.2022
(73) Titulaire: A. Raymond et Cie, 38000 Grenoble (FR)
(72) Inventeur: GUIBERT, Kévin, 38000 GRENOBLE (FR)
(74) Mandataire: IP Trust
(86) Numéro de dépôt international: PCT/FR2020/051254
(87) Numéro de publication internationale: WO 2021/009455

(56) Documents cités:
- US-A- 4 647 082
- US-A1- 2003 168 855
- US-B1- 9 068 680

## Description

### DOMAINE DE L'INVENTION

La présente invention concerne un dispositif de raccordement fluidique compact et démontable entre un équipement et un connecteur afin de facilement connecter un conduit de circulation de fluide. Ce type de dispositif trouve tout particulièrement son intérêt dans le domaine de l'automobile, et plus particulièrement dans le domaine du freinage, et dans ce cas le fluide peut être de l'air comprimé.

### ARRIERE PLAN TECHNOLOGIQUE DE L'INVENTION

Il existe une grande variété de dispositifs de raccordement dans l'état de la technique entre un connecteur de type embout tubulaire à collet annulaire et un équipement présentant un passage traversant. La connexion entre ces deux éléments est souvent réalisée par l'utilisation d'une pièce supplémentaire pouvant se fixer sur l'équipement pour retenir le connecteur tubulaire.

De tels dispositifs sont ainsi connus des documents US20160025252, JP2007107580, US20050173923, JP2003194278, US6173994, US4915421, US4834423, US7118138, US5890749, US5799987, EP1797542, US5356183, US2003168856, US9068680, US4647082 et US2003168855. Notamment, le document US9068680 divulgue un dispositif de raccordement par poussée. De manière équivalente, le document US200316885 divulgue un raccord de fluide enfichable.

Ces dispositifs présentent souvent l'inconvénient d'être encombrant ou de n'être pas facilement démontable ou nécessitent l'emploi d'un outil spécial de démontage.

### OBJET DE L'INVENTION

Un but de l'invention est de proposer un dispositif de raccordement compact et facilement démontable.

### BREVE DESCRIPTION DE L'INVENTION

En vue de la réalisation de ce but, l'objet de l'invention propose un dispositif de raccordement selon la revendication 1.

L'invention propose un dispositif de raccordement d'un connecteur tubulaire définissant une direction longitudinale pourvu d'un collet annulaire à un équipement comportant un passage. Le dispositif de raccordement comprend:
- un embout de connexion au passage de l'équipement, l'embout de connexion étant formé d'un corps tubulaire surmonté d'une tête munie d'une ouverture débouchant dans le corps tubulaire et comprenant une rainure de retenue, la tête comprenant au moins une encoche débouchant sur la rainure de retenue ;
- un verrou flexible de forme annulaire destiné à être logé en partie dans la rainure de retenue, le verrou étant doté d'ergots s'étendant radialement vers le centre du verrou et d'au moins une pièce d'indexation longitudinale reliée à l'ergot et destinée à être logée dans l'encoche de la rainure, le verrou flexible pouvant se déformer et les ergots se refermer sur le connecteur tubulaire après le passage du collet pour se mettre en butée contre celui-ci lorsque le connecteur tubulaire est introduit longitudinalement dans l'embout de connexion ;
- une bague de déverrouillage dotée d'un collier destiné à être inséré dans l'embout de connexion, le collier étant muni d'éléments de déverrouillage destinés à interagir avec les pièces d'indexation du verrou flexible pour forcer son ouverture lorsque la bague de déverrouillage est entrainée en rotation.

Selon d'autres caractéristiques avantageuses et non limitatives de l'invention, prises seules ou selon toute combinaison techniquement réalisable :
- le passage est circulaire et muni d'un filetage interne et le corps tubulaire est muni d'un filetage externe pour solidariser l'embout de connexion à l'équipement ;
- les ergots présentent des plans inclinés pour faciliter la déformation du verrou lors de l'insertion du connecteur tubulaire à travers l'embout de connexion ;
- le verrou flexible présente une forme « en C » et comprend deux extrémités libres susceptible de se rapprocher l'une de l'autre ;
- les éléments de déverrouillage comprennent des rampes ;
- les rampes sont séparées les unes des autres par une butée ;
- chaque rampe est à progression monotone ;
- chaque rampe est formée de deux portions pour présenter un profil « en U » évasé ;
- chaque pièce d'indexation longitudinale présente une portion en saillie vers l'intérieur du verrou, de sorte à former un espace de guidage entre cette partie en saillie et l'ergot qu'elle surplombe pour recevoir les éléments de déverrouillage.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1] La figure 1 représente, en vue éclatée, un assemblage comprenant un dispositif de raccordement conforme à l'invention ;
[Fig. 2] La figure 2 représente, en vue éclatée, un embout de connexion et un verrou conforme à l'invention ;
[Fig. 3] La figure 3 représente, en vue éclatée, un verrou assemblé à un embout de connexion ainsi qu'une bague de déverrouillage conforme à l'invention ;
[Fig. 4] La figure 4 représente une vue en coupe transversale d'un dispositif de raccordement conforme à l'invention en configuration d'assemblage ;
[Fig. 5] La figure 5 représente une vue en coupe, au niveau du collier de la bague de déverrouillage, d'un dispositif de raccordement conforme à l'invention dans une configuration fermée.
[Fig. 6] La figure 6 représente une configuration alternative d'un verrou conforme à l'invention ;
[Fig. 7] La figure 7 représente une vue en coupe, au niveau du collier de la bague de déverrouillage, d'un dispositif de raccordement conforme à un autre mode de réalisation de l'invention dans une configuration ouverte.

### DESCRIPTION DETAILLEE DE L'INVENTION

Par souci de simplification de la description à venir, les mêmes références sont utilisées pour des éléments identiques ou assurant la même fonction.

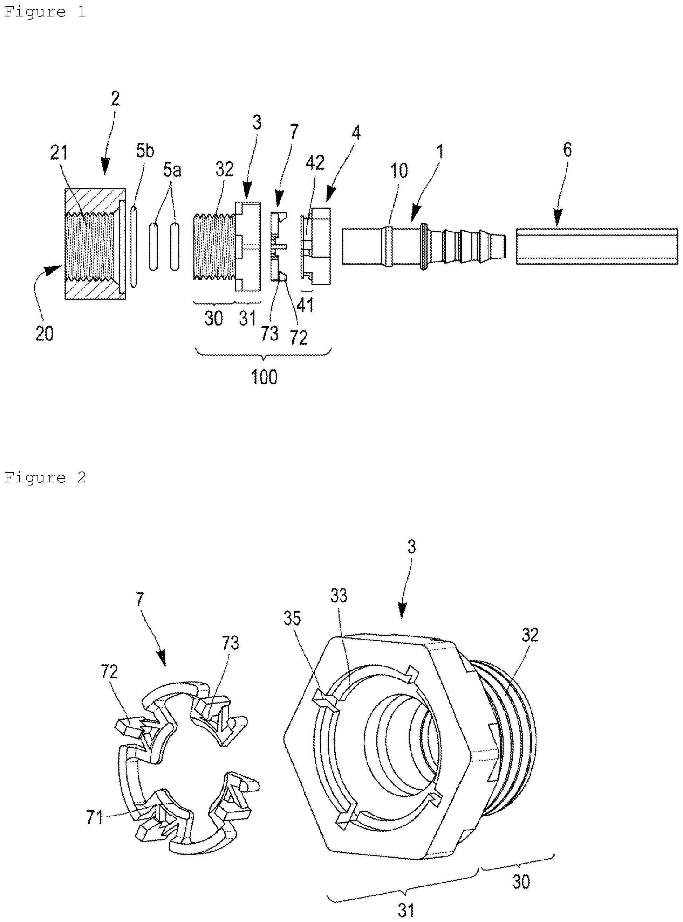

La figure 1 représente, en vue éclatée, un assemblage comprenant un dispositif de raccordement 100 conforme à l'invention.

Le dispositif de raccordement 100 est destiné à raccorder fluidiquement, de manière démontable, un conduit 6 à un équipement 2. A cet effet, l'équipement 2 comporte un passage 20 ici circulaire et muni d'un filetage interne 21. Le fluide peut être un liquide ou un gaz, tel que de l'air comprimé.

Le conduit 6 est relié à une première extrémité d'un connecteur tubulaire 1, par exemple par l'intermédiaire d'un mécanisme du type « queue sapin ». Le connecteur tubulaire 1 est pourvu d'un collet annulaire 10 du côté de sa seconde extrémité destinée à être insérée dans le dispositif de raccordement 100. Le connecteur tubulaire 1 définit une direction longitudinale selon laquelle il peut être inséré dans le dispositif de raccordement 100.

L'équipement 2, le dispositif de raccordement 100 et/ou le connecteur tubulaire 1 portent avantageusement des joints d'étanchéités 5a, 5b, permettant de réaliser une liaison étanche entre eux. Ainsi, sur les exemples représentés, on a prévu deux premiers joints d'étanchéité 5a disposés dans des gorges annulaires d'un embout de connexion 3. On a également prévu un deuxième joint 5b entre le dispositif de raccordement 100 et l'équipement 2, logé dans une gorge aménagée à cet effet dans le passage 20 de l'équipement 2. Il est également envisageable de prévoir d'autres joints d'étanchéité, à la place ou en complément de ceux représentés sur les figures.

### Description générale du dispositif de raccordement

La figure 2 représente une vue éclatée d'un embout de connexion 3 et d'un verrou 7 conforme à l'invention.

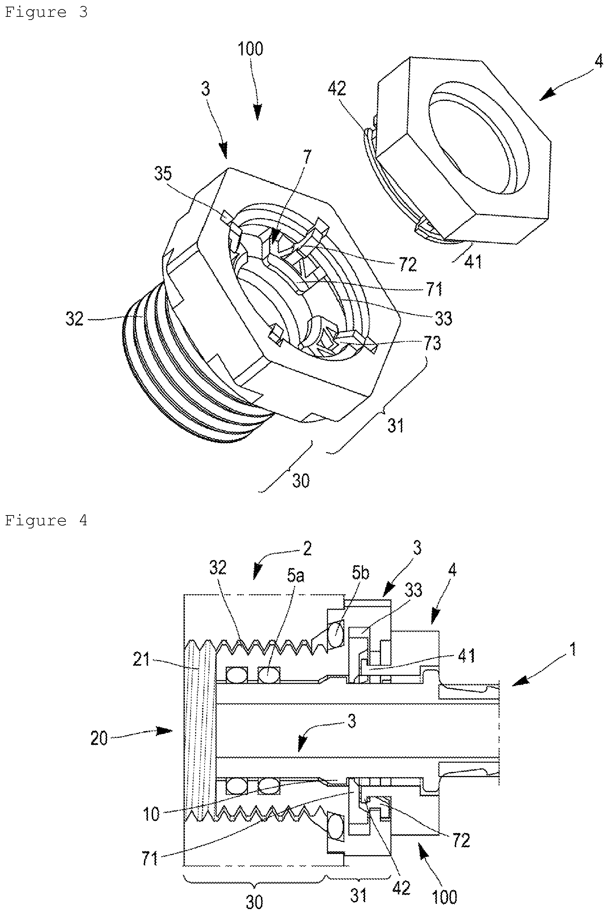

L'embout de connexion 3 est formé d'un corps tubulaire 30 surmontée d'une tête 31. Le corps 30 de l'embout de connexion 3 présente une section transversale dont le diamètre interne correspond sensiblement au diamètre externe du connecteur 1, afin de permettre leur raccordement. Comme cela est plus visible sur la figure 4, le corps 30 présente un épaulement interne afin de créer une butée pour le collet 10 et ainsi limiter l'enfoncement du connecteur 1 dans l'embout de connexion 3. Le corps tubulaire 30 comprend sur sa surface externe un filetage externe 32 configuré pour coopérer avec le filetage interne 21 de l'équipement 2 et ainsi permettre de fixer l'embout de connexion 3 à cet équipement. Toute autre forme de fixation entre ces deux éléments est possible.

La tête 31 est munie d'une ouverture débouchant dans le corps tubulaire 30. Lorsque l'embout de connexion 3 est convenablement assemblé, ici par vissage, à l'équipement 2, la tête 31 est en butée contre une surface d'appui de l'équipement 2 et reste accessible depuis l'extérieur pour permettre par exemple son désassemblage. A cet effet, la tête 31 de l'embout de connexion 3 présente une forme configurée pour être manipulée avec un outil qui peut être très conventionnel. La tête 10 a ici une forme hexagonale afin de pouvoir être saisie par un outil du type clé plate.

La tête 31 de l'embout de connexion 3 comprend sur sa surface interne des moyens de retenue 33 pour retenir le verrou 7. Les moyens de retenues 33 sont ici formés d'une rainure annulaire 33 présente sur toute la périphérie de la surface interne de la tête 31 et dans laquelle peut se loger en partie le verrou 7. Le diamètre de la rainure annulaire 33 est sensiblement supérieur à celui de la forme générale du verrou 7 qui sera décrit plus en détail dans la suite de la description.

De manière avantageuse, l'embout de connexion 3 est de nature métallique, par exemple en laiton.

D'une manière générale, le verrou 7 est destiné à retenir le connecteur tubulaire 1 assemblé à l'embout de connexion 3 lorsque le connecteur tubulaire 1 est introduit longitudinalement dans le dispositif de raccordement 100 pour relier fluidiquement le conduit 6 à l'équipement 2.

Le verrou 7 est une pièce flexible, qui peut être en plastique, et de forme générale annulaire pour se loger et être maintenu en place, après déformation, dans la rainure annulaire 33.

Sur l'exemple représenté sur la figure 2, elle présente deux extrémités qui se font face et qui ne sont pas solidaires l'une de l'autre, ce qui confère le caractère flexible à cette pièce. Cette forme « en C » facilite son insertion dans la rainure annulaire 33.

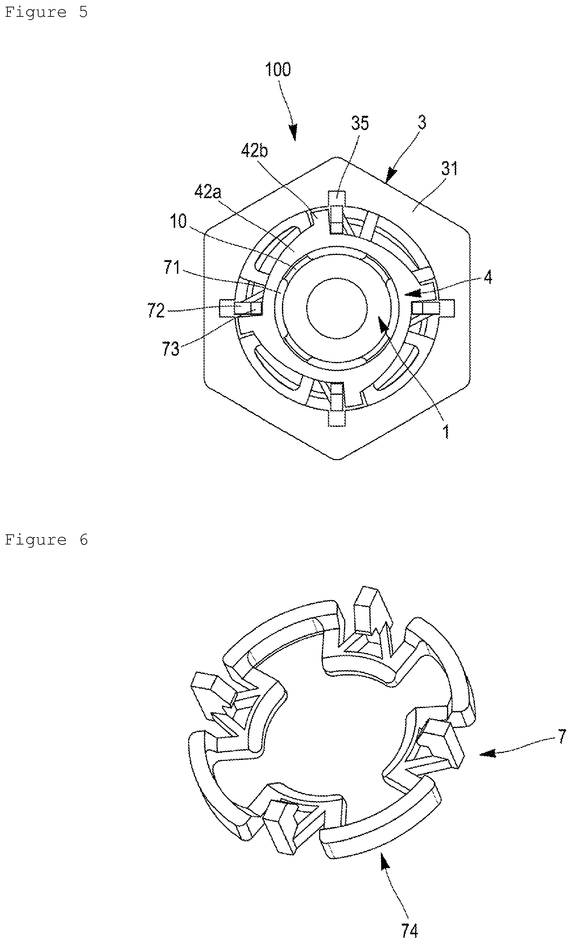

On a représenté sur la figure 6 une configuration alternative d'un verrou 7 conforme à l'invention. Tout comme celle représentée sur la figure 3, le verrou comprend des bretelles 74. Toutefois, le verrou 7 de la figure 6 est parfaitement annulaire et présente donc une forme en « O ». En comprimant le verrou 7 de manière à rapprocher les bretelles les unes des autres, on réduit le diamètre du verrou 7, ce qui permet son introduction dans la rainure annulaire 33 de l'embout de connexion 3

Le verrou 7 est doté d'ergots 71, ici quatre ergots 71 disposés par paire en vis-à-vis les uns des autres sur le verrou de la figure 3 et deux ergots 71 dans le cas du verrou 7 de la figure 6, s'étendant radialement vers le centre du verrou 7 selon un plan transversal comme cela est visible notamment sur les figures 2,4 et 6. Cette configuration des ergots 71 permet d'obtenir un verrou 7 compact, en ayant les ergots 71 contenus dans un plan transversal, et contribue ainsi à rendre le dispositif 100 plus compact.

Comme on l'a déjà énoncé, la rainure annulaire 33 présente un diamètre suffisant pour permettre au verrou 7, lorsque celui-ci est effectivement engagé dans la rainure 33, de se déformer radialement vers l'extérieur. Lorsque le connecteur tubulaire 1 est introduit longitudinalement dans le dispositif de raccordement 100, les ergots 71 peuvent ainsi s'écarter les uns des autres pour laisser progresser le collet 10 et se refermer sur celui-ci. On place ainsi le collet 10 entre des butées formées des ergots 71 du verrou 7 et de l'épaulement interne de l'embout de connexion 3. De manière avantageuse, les ergots 71 et/ou la surface transversale de pénétration du collet 10 présentent des plans inclinés pour faciliter la déformation du verrou 7 lors du passage du collet 10 pendant son introduction.

Le verrou 7 est muni d'au moins une pièce d'indexation 72, s'étendant longitudinalement . Dans l'exemple représenté, chaque pièce d'indexation 72s'étend longitudinalement depuis un ergot 71. La tête 31 de l'embout de connexion 3 comprend des encoches 35 débouchant sur la rainure annulaire 33 pour accueillir les pièces d'indexation 72 du verrou 7 lorsque ce dernier est assemblé à l'embout de connexion 3. Les encoches 35 et les pièces d'indexation 72 permettent de positionner le verrou dans une position radiale déterminée vis-à-vis de l'embout de connexion 3 et de bloquer la rotation du verrou 7 disposé dans cette position déterminée dans la rainure annulaire 33.

Par ailleurs, les encoches 35 ont une profondeur (ou dimension radiale) plus importante que l'étendue radiale des pièces d'indexation 72 afin que ceux-ci puissent se déplacer radialement. En écartant radialement les pièces d'indexation 72 dans les encoches 35, on peut ainsi ouvrir le verrou 7.

Les pièces d'indexation 72 présentent une extrémité saillante en forme de crochet, c'est-à-dire qu'ils présentent une portion distale 73 en saillie vers l'intérieur du verrou 7. On forme de la sorte un espace annulaire de guidage entre la portion distale 73 en saillie et l'ergot 71 qu'elle surplombe. Avantageusement, la surface exposée des portions 73 présente un plan incliné tendant à forcer l'écartement des pièces d'indexation 73 lorsqu'un effort d'appui leur est appliqué.

La figure 3 représente le verrou 7 assemblé à l'embout de connexion 3 ainsi qu'une bague de déverrouillage 4.

La bague de déverrouillage 4 présente une partie principale ouverte (pour être traversée par le connecteur tubulaire 1) et dotée d'un collier 41 destiné à être inséré dans l'embout de connexion 3. Le collier 41 est muni d'éléments de déverrouillage42 disposés en collerette. Lorsque la bague 4 est introduite dans l'embout 3, les éléments de déverrouillage 42 prennent appui sur les pentes inclinées des portions 73, ce qui tend à ouvrir le verrou 7 et ainsi permettre de loger les éléments de déverrouillage 42 dans l'espace annulaire de guidage existant entre les ergots 71 et les portions en saillie 73. D'une manière générale, les éléments de déverrouillage 42 sont destinés à interagir avec le verrou 7 pour forcer son ouverture lorsque la bague 4 est entrainée en rotation et ainsi permettre le désassemblage du connecteur tubulaire 1 de l'embout de connexion 3.

Lorsque la bague de déverrouillage 4 est assemblée à l'embout de connexion 3, la partie principale de la bague 4 dépasse de l'embout 3 ce qui la rend facilement accessible depuis l'extérieur pour être manipulée, par exemple pour permettre son démontage. Tout comme la tête 31 de l'embout 3, la partie principale de la bague de déverrouillage 4 présente une forme configurée pour être manipulée avec un outil qui peut être très conventionnel, ici une forme hexagonale également.

La bague de déverrouillage 4 peut être formée d'une matière plastique.

La figure 5 représente une vue en coupe, au niveau du collier 41 de la bague de déverrouillage 4, le dispositif de raccordement 100 dans une configuration fermée. Les éléments de déverrouillage 42 comprennent ici une pluralité de rampes 42a qui peuvent respectivement glisser contre des pièces d'indexation 72 du verrou 7. Lorsqu'on déplace en rotation la bague de déverrouillage 4 selon un sens de déverrouillage, les pièces d'indexation 72 glissent sur les rampes 42a ce qui tend à les repousser radialement dans les encoches 35. On force de la sorte l'ouverture du verrou 7 en écartant progressivement les ergots 71 pour qu'ils se logent au moins partiellement dans la rainure. On ouvre ainsi un passage permettant le retrait du connecteur tubulaire 1. Lorsque l'on relâche la bague de déverrouillage 4, les rampes 42a tendent à ramener la bague 4 dans sa position initiale et referment ainsi le verrou 7 automatiquement.

Les rampes 42a sont avantageusement conformées à des portions d'ellipses ayant pour centre celui de la bague de déverrouillage 4. Elles sont également séparées les unes des autres par des butées 42b comme cela est bien visible sur la figure 5. Chaque butée 42b est respectivement le point d'origine et de point final d'une rampe 42a. Elle sert à délimiter l'étendue angulaire de rotation de la bague de déverrouillage 4, en entrant en contact avec une pièce d'indexation 72 lorsque la bague est entrainée en rotation.

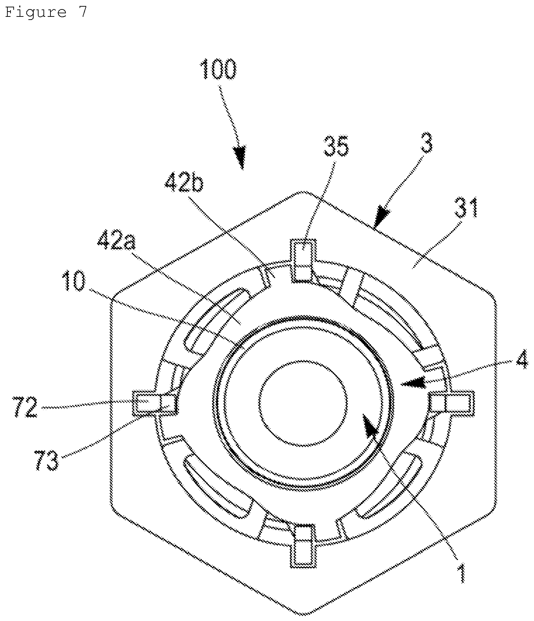

De manière alternative aux rampes 42 à progression monotone représentées sur la figure 3 et 5, on pourra prévoir que chaque rampe 42a soit formée de plusieurs portions distinctes (par exemple de deux portions distinctes ou trois portions distinctes)pour présenter un profil en U évasé, le creux du U formant la position de repos des pièces d'indexation 72. Ce creux peut être disposé au centre de la rampe 42a, par exemple à michemin de glissement de chaque butée 42b. On forme ainsi une bague de déverrouillage 4 configurée pour permettre l'ouverture du verrou 7 dans les deux sens de rotation de la bague 4. Le verrou 7 est alors fermé lorsque les pièces d'indexation 72 sont disposées dans la position de repos, et ouvert lorsque les pièces d'indexation 72 sont placées contre l'une des butées 42b qui délimitent les rampes 42a (figure 7).

### Assemblage et fonctionnement du dispositif de raccordement

L'assemblage du dispositif de raccordement 100 comprend plusieurs étapes.

Une première étape comprend l'assemblage du verrou 7 à l'embout de connexion 3. Le verrou 7 est déformé et/ou compressé pour réduire sa taille et permettre son introduction dans la rainure annulaire 33, en alignant les pièces d'indexation 72 avec les encoches 35. Une fois correctement positionné, le verrou 7 reprend sa forme initiale essentiellement annulaire et ne peut plus être retiré de l'embout de connexion 3 (à moins de forcer à nouveau sa déformation). A l'issue de cette étape, le dispositif de connexion 100 formé de l'embout 3 et du verrou 7 permet de retenir le connecteur tubulaire 1 dans l'embout 3, toutefois et en l'absence de la bague de déverrouillage 4, la déconnexion du connecteur tubulaire 1 n'est pas possible.

Une deuxième étape comprend l'assemblage de la bague de déverrouillage 4 à l'embout de connexion 3 muni du verrou 7. Le collier 41 de la bague de déverrouillage 4 est inséré dans l'embout de connexion 3. Les flancs des rampes 42a viennent en appui contre les pentes inclinées des portions 73, ce qui tend à ouvrir le verrou 7, et ainsi permettre de loger les rampes 42a dans l'espace de guidage existant entre les ergots 71 et les portions en saillie 73.

Une troisième étape, qui peut être réalisée avant la première étape ou après la deuxième étape, correspond à la fixation, par vissage, de l'embout de connexion 3 à l'équipement 2 par le biais de leur filetage respectif 32 et 21.

La quatrième et dernière étape correspond à l'insertion du connecteur tubulaire 1 dans le dispositif de raccordement 100 afin de réaliser la liaison fluidique entre le conduit 6 et l'équipement 2. Lors de l'insertion du connecteur 1, le collet 10 vient en appui contre les ergots 71 pour les déformer et faire reculer les pièces d'indexation 72 dans les encoches 35. Une fois la traversée du collet 10 terminée, par exemple en butée contre l'épaulement interne de l'embout de connexion 3, les ergots 71 reprennent leur position initiale, et se referment sur le connecteur 1. Dans cette configuration verrouillée, illustrée sur les figures 4 et 5, le collet 10 est pris entre l'épaulement interne de l'embout 3 et les ergots 71. Il n'est pas possible de désassembler le connecteur 1 de l'embout de connexion 3.

### Déverrouillage du dispositif de raccordement

Le démontage du connecteur tubulaire 1 est possible grâce à la bague de déverrouillage 4. Pour démonter le dispositif de raccordement 100, il suffit d'utiliser un outil, par exemple une clé plate, et appliquer une rotation ici d'environ 30°, sur la bague de déverrouillage 4 pour forcer l'écartement des ergots 71 par appui progressif des rampes 42b sur les pièces d'indexation 72.

La rotation de la bague 4 fait coulisser les rampes 42a et écarte progressivement les pièces d'indexation 72 qui peuvent librement s'écarter dans les encoches 35, ce qui entraine le retrait des ergots 71 de la rainure. Le verrou 7 est totalement ouvert lorsque les pièces d'indexation 72 glissent sur les rampes 42 et entrent en contact avec les butées 42b et il est possible de retirer le connecteur 1 de l'embout de connexion 3.

Lorsque l'on cesse d'appliquer les efforts tendant à entrainer la bague de déverrouillage 4 en rotation, les rampes 42a tendent à ramener celle-ci dans sa position initiale et referment ainsi le verrou 7 automatiquement.

Bien entendu l'invention n'est pas limitée au mode de mise en œuvre décrit et on peut y apporter des variantes de réalisation sans sortir du cadre de l'invention tel que défini par les revendications.

Il est par exemple possible, pour des raisons de sécurité, de prévoir deux collets 10 successivement disposés le long du connecteur tubulaire 1. Dans ce cas, au cours de la quatrième étape d'insertion du connecteur tubulaire, les ergots 71 se déforment une première fois pour laisser passer le premier collet, se referment une première fois sur le connecteur, se déforment à nouveau une seconde fois pour laisser passer le deuxième collet pour se refermer en position de verrouillage.

## Revendications

1. Dispositif de raccordement (100) d'un connecteur tubulaire (1) définissant une direction longitudinale pourvu d'un collet annulaire (10) à un équipement (2) comportant un passage (20), le dispositif de raccordement (100) comprenant :
- un embout de connexion (3) au passage (20) de l'équipement (2), l'embout de connexion (3) étant formé d'un corps tubulaire (30) surmonté d'une tête (31) munie d'une ouverture débouchant dans le corps tubulaire (30) et comprenant une rainure de retenue (33), la tête (31) comprenant au moins une encoche (35) débouchant sur la rainure de retenue (33) ;
- un verrou flexible (7) de forme annulaire destiné à être logé en partie dans la rainure de retenue (33), le verrou étant doté d'au moins un ergot (71) s'étendant radialement vers le centre du verrou (7) et d'au moins une pièce d'indexation longitudinale (72) reliée à l'ergot (71) et destinée à être logée dans l'encoche (35) de la rainure (33), le verrou flexible (7) pouvant se déformer et les ergots (71) se refermer sur le connecteur tubulaire (1) après le passage du collet (10) lorsque le connecteur tubulaire (1) est introduit longitudinalement dans l'embout de connexion (3) ;
- une bague de déverrouillage (4) dotée d'un collier (41) destiné à être inséré dans l'embout de connexion (3), le collier (41) étant muni d'éléments de déverrouillage (42) destinés à interagir avec les pièces d'indexation (72) du verrou flexible (7) pour forcer son ouverture lorsque la bague de déverrouillage (4) est entrainée en rotation.

2. Dispositif de raccordement (100) selon la revendication précédente dans lequel le passage (20) est circulaire et muni d'un filetage interne (21) et le corps tubulaire (30) est muni d'un filetage externe (32) pour solidariser l'embout de connexion (3) à l'équipement (2).

3. Dispositif de raccordement (100) selon l'une des revendications précédentes dans lequel les ergots (71) présentent des plans inclinés pour faciliter la déformation du verrou (7) lors de l'insertion du connecteur tubulaire (1) à travers l'embout de connexion (3).

4. Dispositif de raccordement (100) selon l'une des revendications précédentes dans lequel le verrou flexible (7) présente une forme « en C » et comprend deux extrémités libres susceptible de se rapprocher l'une de l'autre.

5. Dispositif de raccordement (100) selon l'une des revendications précédentes dans lequel les éléments de déverrouillage (42) comprennent des rampes (42a).

6. Dispositif de raccordement (100) selon la revendication précédente dans lequel les rampes (42a) sont séparées les unes des autres par une butée (42b).

7. Dispositif de raccordement (100) selon la revendication 5 ou 6 dans lequel chaque rampe (42a) est à progression monotone.

8. Dispositif de raccordement (100) selon la revendication 5 ou 6 dans lequel chaque rampe (42a) est formée d'une pluralité de portions pour présenter un profil « en U » évasé.

9. Dispositif de raccordement (100) selon l'une des revendication 5 à 7 dans lequel les rampes (42a) sont conformées à des portions d'ellipses ayant pour centre celui de la bague de déverrouillage (4).

10. Dispositif de raccordement (100) selon l'une des revendications précédentes dans lequel les ergots (71) sont contenus dans un plan transversal.

11. Dispositif de raccordement (100) selon l'une des revendications précédentes dans lequel chaque pièce d'indexation longitudinale (72) présente une portion en saillie (73) vers l'intérieur du verrou 7, de sorte à former un espace de guidage entre cette partie en saillie (73) et l'ergot (71) qu'elle surplombe pour recevoir les éléments de déverrouillage (42).

## Patentansprüche

1. Vorrichtung (100) zum Anschließen eines röhrenförmigen Verbinders (1), der eine Längsrichtung definiert, der mit einem ringförmigen Bund (10) versehen ist, an eine Einrichtung (2), die einen Durchgang (20) aufweist, die Anschlussvorrichtung (100) umfassend:
- ein Verbindungsendstück (3) an dem Durchgang (20) der Einrichtung (2), wobei das Verbindungsendstück (3) aus einem röhrenförmigen Körper (30) ausgebildet ist, der von einem Kopf (31) überragt wird, der mit einer Öffnung ausgestattet ist, die in den röhrenförmiger Körper (30) mündet und umfassend eine Haltenute (33), der Kopf (31) umfassend mindestens eine Kerbe (35), die auf die Haltenute (33) mündet;
- einen flexiblen Riegel (7) in Ringform, der dafür bestimmt ist, teilweise in der Haltenute (33) untergebracht zu werden, wobei der Riegel mit mindestens einem Vorsprung (71), der sich in Richtung der Mitte des Riegels (7) radial erstreckt, und mit mindestens einem Längsindexierungsstück (72) ausgerüstet ist, das mit dem Vorsprung (71) gekoppelt und dafür bestimmt ist, in der Kerbe (35) der Nute (33) untergebracht zu werden, wobei auf dem röhrenförmigen Verbinder (1) nach dem Durchgang des Bunds (10) sich der flexible Riegel (7) verformen kann und sich die Vorsprünge (71) verschließen können, wenn der röhrenförmige Verbinder (1) in Längsrichtung in das Verbindungsendstück (3) eingebracht wird;
- eine Entriegelungshülse (4), die mit einem Kragen (41) ausgerüstet ist, der dafür bestimmt ist, in das Verbindungsendstück (3) eingeführt zu werden, wobei der Kragen (41) mit Entriegelungselementen (42) ausgestattet ist, die dafür bestimmt sind, mit den Indexierungsstücken (72) des flexiblen Riegels (7) zum Erzwingen seiner Öffnung zusammenzuwirken, wenn die Entriegelungshülse (4) in Drehung versetzt wird.

2. Anschlussvorrichtung (100) nach dem vorstehenden Anspruch, wobei der Durchgang (20) rund und mit einem Innengewinde (21) ausgestattet ist und der röhrenförmige Körper (30) mit einem Außengewinde (32) zum Befestigen des Verbindungsendstücks (3) an der Einrichtung (2) ausgestattet ist.

3. Anschlussvorrichtung (100) nach einem der vorstehenden Ansprüche, wobei die Vorsprünge (71) geneigte Ebenen zum Ermöglichen der Verformung des Riegels (7) während des Einführens des röhrenförmigen Verbinders (1) durch das Verbindungsendstück (3) vorweist.

4. Anschlussvorrichtung (100) nach einem der vorstehenden Ansprüche, wobei der flexible Riegel (7) eine "C"-Form vorweist und zwei freie Enden umfasst, die imstande sind, sich einander anzunähern.

5. Anschlussvorrichtung (100) nach einem der vorstehenden Ansprüche, wobei die Entriegelungselemente (42) Rampen (42a) umfassen.

6. Anschlussvorrichtung (100) nach dem vorstehenden Anspruch, wobei die Rampen (42a) durch einen Anschlag (42b) voneinander getrennt sind.

7. Anschlussvorrichtung (100) nach Anspruch 5 oder 6, wobei jede Rampe (42a) mit monotoner Steigung ist.

8. Anschlussvorrichtung (100) nach Anspruch 5 oder 6, wobei jede Rampe (42a) zum Vorweisen eines aufgeweiteten "U"-Profils aus einer Vielzahl von Abschnitten ausgebildet ist.

9. Anschlussvorrichtung (100) nach einem der Ansprüche 5 bis 7, wobei die Rampen (42a) an Ellipsenabschnitte angepasst sind sind, die als Mittelpunkt den der Entriegelungshülse (4) besitzen.

10. Anschlussvorrichtung (100) nach einem der vorstehenden Ansprüche, wobei die Vorsprünge (71) in einer Querebene enthalten sind.

11. Anschlussvorrichtung (100) nach einem der vorstehenden Ansprüche, wobei jedes Längsindexierungsstück (72) einen überstehenden Abschnitt (73) in Richtung der Innenseite des Riegels 7 vorweist, um einen Führungsraum zwischen diesem überstehenden Teil (73) und dem Vorsprung (71) auszubilden, von dem er sich zum Aufnehmen der Entriegelungselemente (42) abhebt.

## Claims

1. Connection device (100) for connecting a tubular connector (1) that defines a longitudinal direction and is provided with an annular collar (10) to an apparatus (2) comprising a passage (20), the connection device (100) comprising:
- a connection end fitting (3) connecting to the passage (20) of the apparatus (2), the connection end fitting (3) being formed of a tubular body (30) and a head (31) mounted thereon provided with an opening leading into the tubular body (30) and comprising a retaining groove (33), the head (31) comprising at least one notch (35) leading into the retaining groove (33);
- a flexible ring-shaped lock (7) intended to be partially housed in the retaining groove (33), the lock being provided with at least one lug (71) extending radially toward the center of the lock (7) and with at least one longitudinal indexing piece (72) connected to the lug (71) and intended to be housed in the notch (35) of the groove (33), the flexible lock (7) being deformable and the lugs (71) being able to close on the tubular connector (1) after the collar (10) passes through when the tubular connector (1) is inserted longitudinally into the connection end fitting (3);
- an unlocking ring (4) provided with a collar (41) intended to be inserted into the connection end fitting (3), the collar (41) being provided with unlocking elements (42) intended to interact with the indexing pieces (72) of the flexible lock (7) to force its opening when the unlocking ring (4) is rotated.

2. Connection device (100) according to the preceding claim, wherein the passage (20) is circular and provided with an inner thread (21), and the tubular body (30) is provided with an outer thread (32) to secure the connection end fitting (3) to the apparatus (2).

3. Connection device (100) according to any of the preceding claims, wherein the lugs (71) have inclined planes to allow deformation of the lock (7) during the insertion of the tubular connector (1) through the connection end fitting (3).

4. Connection device (100) according to any of the preceding claims, wherein the flexible lock (7) has a "C" shape and comprises two free ends capable of being moved toward each other.

5. Connection device (100) according to any of the preceding claims, wherein the unlocking elements (42) comprise ramps (42a).

6. Connection device (100) according to the preceding claim, wherein the ramps (42a) are separated from each other by a stop (42b).

7. Connection device (100) according to either claim 5 or claim 6, wherein each ramp (42a) has a monotonic progression.

8. Connection device (100) according to either claim 5 or claim 6, wherein each ramp (42a) is formed of a plurality of portions to have a flared "U" profile.

9. Connection device (100) according to any of claims 5 to 7, wherein the ramps (42a) are shaped as portions of ellipses having as their center the center of the unlocking ring (4).

10. Connection device (100) according to any of the preceding claims, wherein the lugs (71) are contained in a transverse plane.

11. Connection device (100) according to any of the preceding claims, wherein each longitudinal indexing piece (72) has a projecting portion (73) projecting toward the inside of the lock 7, so as to form a guide space between said projecting portion (73) and the lug (71) which it overhangs in order to receive the unlocking elements (42).
